# FASCICULE DE BREVET EUROPEEN

(11) **EP 3 752 420 B1**
(45) Date de publication et mention de la délivrance du brevet: **29.05.2024**
(21) Numéro de dépôt: 19710043.1
(22) Date de dépôt: 08.02.2019
(51) Int. Cl.: B64D 15/04, B64D 33/02

(54) **DISPOSITIF DE DÉGIVRAGE ET DE TRAITEMENT ACOUSTIQUE POUR UNE LÈVRE D'ENTRÉE D'AIR D'UNE NACELLE DE TURBORÉACTEUR**
ENTEISUNGS- UND SCHALLBEHANDLUNGSVORRICHTUNG FÜR EINE LUFTEINLASSLIPPE EINER TURBOSTRAHL-TRIEBWERKSGONDEL
DE-ICING AND ACOUSTIC TREATMENT DEVICE FOR AN AIR INTAKE LIP OF A TURBOJET ENGINE NACELLE

(30) Priorité: 12.02.2018 FR 1851152
(43) Date de publication de la demande: 23.12.2020
(73) Titulaire: Safran Nacelles, 76700 Gonfreville-l'Orcher (FR)
(72) Inventeur: DIGEOS, Virginie Emmanuelle Anne Marie, 76700 Gonfreville L'Orcher (FR); BOILEAU, Patrick, 76700 Gonfreville L'Orcher (FR)
(74) Mandataire: Germain Maureau
(86) Numéro de dépôt international: PCT/FR2019/050286
(87) Numéro de publication internationale: WO 2019/155175

(56) Documents cités:
- WO-A1-2009/081020
- WO-A1-2016/005711
- FR-A1- 2 925 463
- US-A- 4 688 757
- US-A1- 2011 139 927

## Description

L'invention concerne un dispositif de dégivrage et de traitement acoustique pour une lèvre d'entrée d'air d'une nacelle de turboréacteur et son procédé de fabrication.

Un avion est propulsé par un ou plusieurs ensembles propulsifs comprenant chacun un turboréacteur/turbopropulseur logé dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'entrée d'air comprend, d'une part, une lèvre d'entrée d'air adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser l'air vers les aubes de la soufflante. L'ensemble est rattaché en amont d'un carter de la soufflante appartenant à la section amont de la nacelle.

En vol, selon les conditions de température et d'humidité, de la glace peut se former sur la nacelle, notamment au niveau de la surface externe de la lèvre d'entrée d'air. La présence de glace ou de givre modifie les propriétés aérodynamiques de l'entrée d'air et perturbe l'acheminement de l'air vers la soufflante. De plus, la formation de givre sur l'entrée d'air de la nacelle et l'ingestion de glace par le moteur en cas de détachement de blocs de glace peuvent endommager le moteur, et présenter un risque pour la sécurité du vol.

Une solution pour dégivrer la surface externe de la lèvre d'entrée d'air consiste à éviter que de la glace ne se forme sur cette surface externe en maintenant la surface concernée à une température suffisante.

Ainsi, il est connu, par exemple du brevet US 4 688 757, de prélever de l'air chaud au niveau du compresseur du turboréacteur et de l'amener au niveau de la lèvre d'entrée d'air afin de réchauffer la surface externe de la lèvre.

Aussi, il est connu d'équiper la lèvre d'entrée d'air de la nacelle d'un panneau acoustique adapté pour absorber une partie du bruit émis depuis l'intérieur de la nacelle vers l'extérieur de la nacelle.

Typiquement, le panneau acoustique comporte une peau acoustique perforée qui est agencée en regard de la veine d'entrée d'air de la nacelle et une âme alvéolaire qui est assemblée sur la peau acoustique.

L'âme alvéolaire comporte une pluralité de cellules acoustiques, formant résonateurs de Helmholtz, qui sont séparées entre elles par des cloisons périphériques.

Les cellules acoustiques s'étendent en épaisseur depuis une extrémité avant en appui sur la peau acoustique, jusqu'à une extrémité arrière obturée par une face arrière.

L'âme alvéolaire est généralement réalisée à plat et présente une grande résistance mécanique à la compression et à la flexion, ce qui rend difficile la mise en forme du panneau acoustique, notamment pour mettre en forme le panneau acoustique suivant la géométrie d'une lèvre d'entrée d'air d'une nacelle.

Le document WO 2009/081020 décrit et représente une structure pour le traitement acoustique qui fait coexister un traitement acoustique et un traitement du givre.

Selon ce document, la structure comprend une peau acoustique, une âme alvéolaire comportant des bandes de cellules, une peau réflectrice et une pluralité de canaux qui sont interposés entre les cellules et qui sont destinés à canaliser de l'air chaud d'un système de dégivrage.

On notera que les canaux et les bandes de cellules forment des sous ensembles distincts qui sont fabriqués indépendemment et qui sont assemblés entre eux.

La fabrication d'une telle structure s'avère longue et onéreuse.

De plus, les bandes de cellules qui forment l'âme alvéolaire ne semblent pas présenter une résistance mécanique élevée, l'âme alvéolaire participe donc peu à la résistance mécanique de la lèvre d'entrée d'air.

Aussi, la conception des canaux pour la circulation de l'air chaud semble limiter la circulation de l'air chaud et la surface d'échange entre l'air chaud et la peau acoustique de la lèvre d'entrée d'air.

La présente invention vise notamment à résoudre ces inconvénients et se rapporte pour ce faire à un dispositif de dégivrage et de traitement acoustique pour une lèvre d'entrée d'air d'une nacelle de turboréacteur, caractérisé en ce qu'il comporte une structure acoustique gaufrée qui est adaptée pour être en appui sur une peau acoustique de la lèvre d'entrée d'air, et qui délimite une pluralité de cellules acoustiques, chaque cellule étant délimitée par une paroi périphérique indépendante qui permet la circulation d'un flux d'air de dégivrage autour de chaque cellule.

Par structure acoustique gaufrée on entend une structure présentant une alternance de cellules acoustiques en relief et de creux disposés en réseau, dans laquelle les creux situés entre les cellules constituent des lignes entrecroisées tel un quadrillage.

Le dispositif selon l'invention permet à l'air de dégivrage de circuler autour de chaque cellule, la structure acoustique qui forme les cellules transmettant les calories de l'air de dégivrage vers la peau acoustique par conduction.

Selon une autre caractéristique, la structure acoustique délimite au moins deux rangées de cellules qui sont reliées entre elles par au moins une portion de liaison adaptée pour être en appui sur la peau acoustique de la lèvre d'entrée d'air.

Cette caractéristique augmente la surface de contact entre la structure acoustique et la peau acoustique pour favoriser la conduction des calories de l'air de dégivrage vers la peau acoustique.

Selon une autre caractéristique, les cellules sont réalisées venues de matière avec la portion de liaison associée.

Selon une autre caractéristique, chaque rangée de cellules acoustiques présente une forme annulaire autour d'un axe central.

Selon une autre caractéristique, la structure acoustique présente une forme annulaire monolithique ou une forme de plusieurs secteurs angulaires monolithiques.

Cette caractéristique favorise la fabrication de la structure acoustique.

Selon une autre caractéristique, chaque cellule présente une forme globalement pyramidale.

Selon une autre caractéristique, le dispositif comporte au moins un déflecteur qui est conçu pour guider un flux d'air de dégivrage vers la structure acoustique.

Cette caractéristique améliore l'échange thermique entre l'air de dégivrage et la structure acoustique.

Selon une autre caractéristique, le dispositif comporte un tube de distribution de l'air de dégivrage qui présente une forme torique autour de l'axe et qui délimite une pluralité de fentes formant injecteurs, les fentes étant agencées en regard des cellules pour diriger l'air de dégivrage entre les cellules.

L'invention concerne également un procédé de fabrication d'un dispositif de dégivrage et de traitement acoustique pour une lèvre d'entrée d'air d'une nacelle de turboréacteur, dispositif qui comporte une structure acoustique gaufrée qui est adaptée pour être en appui sur une peau acoustique de la lèvre d'entrée d'air, et qui délimite une pluralité de cellules acoustiques, chaque cellule étant délimitée par une paroi périphérique indépendante qui permet la circulation d'un flux d'air de dégivrage autour de chaque cellule, le procédé comprenant en outre au moins une étape de fabrication qui consiste à réaliser la structure acoustique venue de matière en une pièce monolithique.

L'invention concerne également une nacelle de turboréacteur comportant un dispositif de dégivrage et de traitement acoustique du type décrit précédemment.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en section longitudinale qui illustre une nacelle de turboréacteur comprenant une lèvre d'entrée d'air équipée d'un dispositif de dégivrage et de traitement acoustique selon l'invention ;
- la figure 2 est une vue en perspective avec arrachement qui illustre la structure acoustique gaufrée du dispositif selon l'invention ;
- la figure 3 est une vue en perspective de détail en section longitudinale qui illustre la structure acoustique gaufrée du dispositif selon l'invention sur la peau acoustique ;
- la figure 4 est une vue schématique en section transversale qui illustre des déflecteurs pour le guidage de l'air de dégivrage dans la lèvre, selon une première variante de réalisation de l'invention ;
- la figure 5 est une vue schématique en section transversale qui illustre un déflecteur pour le guidage de l'air de dégivrage dans la lèvre, selon une deuxième variante de réalisation de l'invention ;
- la figure 6 est une vue schématique en section longitudinale qui illustre le déflecteur de la figure 5, selon la deuxième variante de réalisation de l'invention ;
- la figure 7 est une vue schématique en section transversale qui illustre un tube pour le guidage de l'air de dégivrage dans la lèvre, selon une troisième variante de réalisation de l'invention ;
- la figure 8 est une vue schématique en section longitudinale qui illustre le déflecteur de la figure 7, selon la troisième variante de réalisation de l'invention.

Dans la description et les revendications, on utilisera à titre non limitatif la terminologie longitudinal, vertical et transversal en référence au trièdre L, V, T indiqué aux figures, dont l'axe L est parallèle à l'axe A central de la nacelle.

On notera que l'axe vertical V s'étend globalement radialement par rapport à l'axe A central longitudinal de la nacelle et l'axe transversal T s'étend globalement tangentiellement par rapport à l'axe A central longitudinal de la nacelle.

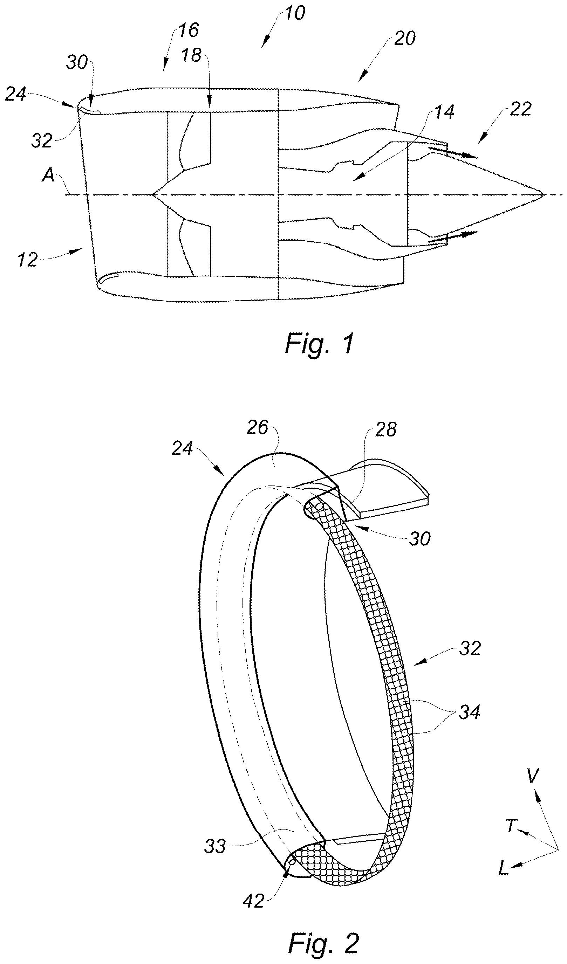

A noter également que dans la présente demande de brevet, les termes « amont » et « aval » doivent s'entendre par rapport à la circulation du flux d'air à l'intérieur de l'ensemble propulsif formé par la nacelle et le turboréacteur, c'est-à-dire de la gauche vers la droite de la figure 1.

Sur l'ensemble des figures, des références identiques ou analogues représentent des organes ou ensembles d'organes identiques ou analogues.

On a représenté à la figure 1 une nacelle 10 de forme globalement annulaire qui s'étend autour d'un axe A central longitudinal.

La nacelle 10 comprend une entrée d'air 12 en amont du moteur 14, une section médiane 16 destinée à entourer une soufflante 18 du turboréacteur, une section aval 20 abritant des moyens d'inversion de poussée et destinée à entourer la chambre de combustion du turboréacteur, et une tuyère d'éjection 22 dont la sortie est située en aval du turboréacteur.

Comme on peut le voir à la figure 2, l'entrée d'air 12 comprend une lèvre 24 d'entrée d'air qui forme un volume de forme annulaire autour de l'axe A central de la nacelle 10, de section en forme de « D ».

La lèvre 24 d'entrée d'air est délimitée par une paroi externe 26 amont à dégivrer, formant bord d'attaque, et une cloison aval 28 qui sépare le volume délimité par la lèvre 24 d'entrée d'air et le tronçon de la nacelle 10 qui est relié sur la lèvre 24.

La lèvre 24 est équipée d'un dispositif 30 de dégivrage et de traitement acoustique qui comporte une structure acoustique 32 gaufrée qui est en appui sur une peau acoustique 33 perforée de la lèvre 24.

La structure acoustique 32 présente une forme annulaire autour de l'axe A central de la nacelle.

Aussi, la structure acoustique 32 délimite une pluralité de cellules 34 acoustiques agencées en trois rangées 36 qui s'étendent chacune en cercle autour de l'axe A central.

Chaque cellule 34 est délimitée par une paroi périphérique 38 indépendante qui permet la circulation d'un flux d'air de dégivrage autour de chaque cellule 34.

On entend par « paroi périphérique indépendante » que les cellules 34 adjacentes ne présentent pas de paroi commune, de sorte que l'air de dégivrage peut circuler tout autour de chaque cellule 34.

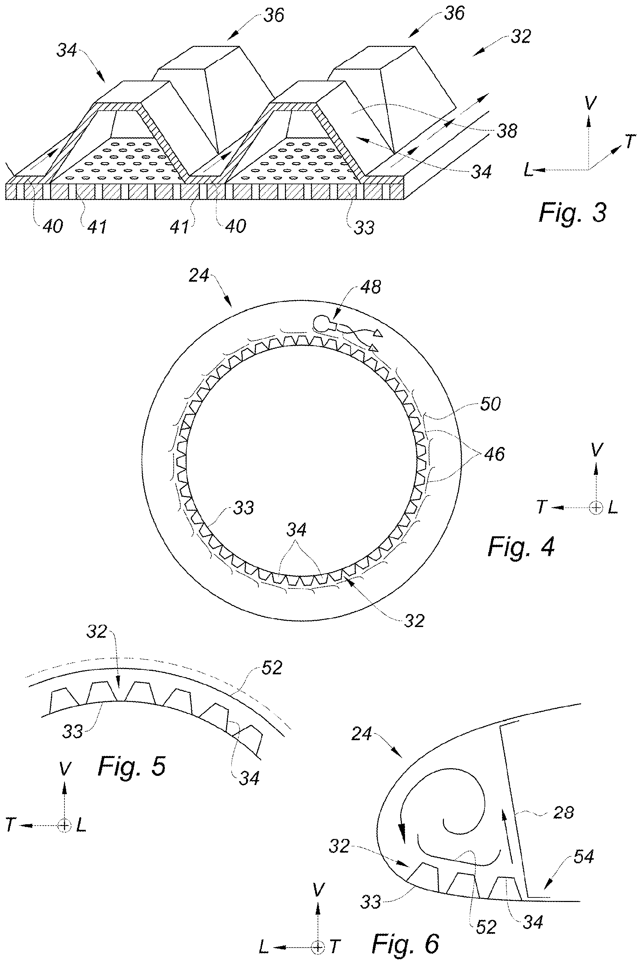

Comme on peut le voir à la figure 3, chaque cellule 34 présente une forme de dôme.

Plus particulièrement, selon l'exemple représenté à la figure 3, chaque cellule 34 présente une forme pyramidale, la paroi périphérique 38 de chaque cellule 34 formant quatre faces qui sont chacune en contact avec l'air de dégivrage qui circule dans la lèvre 24.

Toutefois, à titre non limitatif, chaque cellule 34 peut présenter une forme parallélépipédique, comme par exemple une forme carrée.

En référence à la figure 3, les trois rangées 36 sont reliées entre elles deux à deux par deux portions de liaison 40 qui sont en appui sur la peau acoustique 33 de la lèvre 24 d'entrée d'air.

Chaque portion de liaison 40 est une bande qui s'étend longitudinalement en largeur et qui épouse la forme de la lèvre 24.

Les cellules 34 adjacentes à chaque portion de liaison 40 forment une vallée dans laquelle l'air de dégivrage s'écoule pour transmettre des calories à la peau acoustique 33 par conduction, par l'intermédiaire de la structure acoustique 32 et particulièrement par l'intermédiaire des portions de liaison 40.

De plus, la forme en dôme de chaque cellule 34 est également adaptée pour que l'air de dégivrage circule longitudinalement entre les cellules 34, c'est-à-dire perpendiculairement aux portions de liaison 40.

A titre non limitatif, la structure acoustique 32 peut également comporter des bandes de liaison (non représentées) qui s'étendent longitudinalement en longueur pour relier les cellules 34 entre elles. Cette caractéristique est particulièrement adaptée aux cellules 34 de forme parallélépipédique pour permettre d'écarter les cellules 34 et permettre à l'air de dégivrage de circuler longitudinalement entre les cellules 34.

Toujours selon la figure 3, on notera que les cellules 34 sont réalisées venues de matière avec la portion de liaison 40 associée.

Autrement dit, chaque cellule 34 et chaque portion de liaison 40 sont formées par la structure acoustique 32 en une pièce monolithique. De préférence, la structure acoustique 32 est réalisée par formage à froid par emboutissage d'une tôle métallique.

Toutefois, à titre non limitatif, la structure acoustique 32 peut également être réalisée par formage par explosion, par formage incrémental, par magnétoformage, ou encore par formage à chaud.

Aussi, la structure acoustique 32 est de préférence réalisée en plusieurs secteurs angulaires.

De plus, la structure acoustique 32 est rapportée et fixée sur la peau acoustique 33 perforée, par exemple par brasage. La tôle qui sert à fabriquer la structure acoustique 32 peut être co-laminée avec un alliage de brasure pour supprimer l'étape de dépose de la brasure sur la structure acoustique 32.

A titre non limitatif, la structure acoustique 32 peut également être fixée par soudage.

Les trous 41 formés dans la peau acoustique 33 qui sont agencés au droit des portions de liaison 40 sont bouchés par les portions de liaison acoustique 40 et les trous 41 qui sont agencés au droit des cellules 34 sont ouverts et débouchent dans les cellules 34.

Selon un autre aspect de l'invention, le dispositif 10 comporte un tube 42 de distribution de l'air de dégivrage illustré aux figures 2, 7 et 8, qui présente une forme torique autour de l'axe A central et qui est agencé dans la lèvre 24.

Le tube 42 comporte une entrée (non représentée) qui est reliée à une source d'air chaud de dégivrage et une sortie (non représentée).

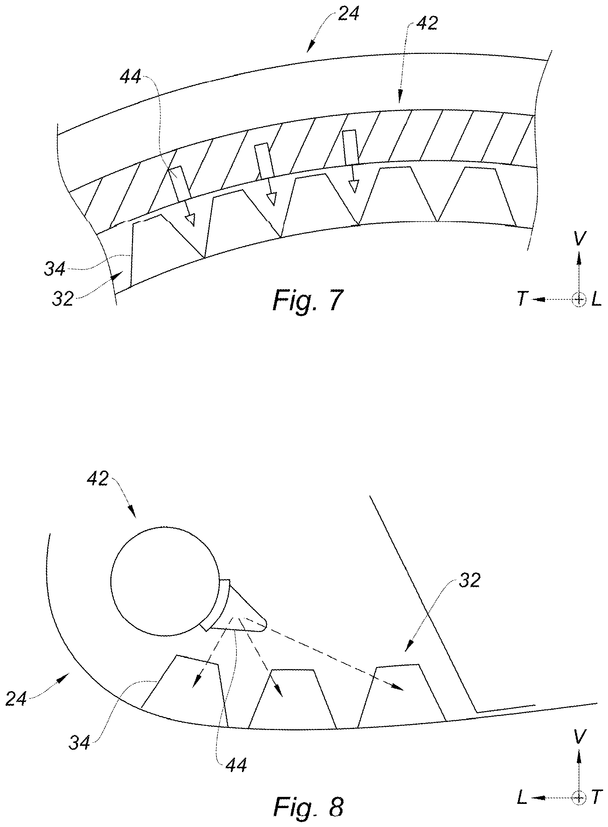

De plus, le tube 42 délimite une pluralité de fentes 44 formant injecteurs, qui sont agencées en regard des cellules 34 et qui dirigent l'air de dégivrage entre les cellules 34, de sorte que l'air de dégivrage passe autour de chaque cellule 34 comme on peut le voir aux figures 7 et 8.

Selon une première variante de réalisation illustrée à la figure 4, le dispositif 10 comporte une pluralité de déflecteurs 46 qui remplacent le tube 42 de distribution d'air de dégivrage et qui sont agencés angulairement de façon régulière autour de l'axe A central.

Selon cette première variante, l'air de dégivrage est injecté dans la lèvre 24 par une buse 48 qui imprime un mouvement circulaire à l'air de dégivrage, autour de l'axe A central.

De plus, chaque déflecteur 46 chapeaute la structure acoustique 32 et s'étend globalement tangentiellement par rapport à l'axe A central, et chaque déflecteur 46 présente un bord d'attaque 50 qui est sensiblement relevé pour diriger une partie du flux d'air de dégivrage vers les cellules 34 pour favoriser les échanges thermiques.

Selon une seconde variante de réalisation illustrée aux figures 5 et 6, le dispositif 10 comporte un déflecteur 52 annulaire qui s'étend autour de l'axe A central et qui chapeaute la structure acoustique 32.

En référence à la figure 6, l'air de dégivrage est injecté dans la lèvre 32 par un une entrée 54 qui est ménagée dans la cloison aval 28, de sorte que l'air de dégivrage tourbillonne dans la lèvre 24 comme illustré par la flèche sur la figure 6.

Le déflecteur 52 est recourbé à ses deux extrémités pour que le flux d'air de dégivrage tourbillonnant passe entre le déflecteur 52 et les cellules 34, pour favoriser les échanges thermiques.

L'invention concerne également un procédé de fabrication d'un dispositif 10 de dégivrage et de traitement acoustique du type décrit précédemment, qui comprend une étape de fabrication qui consiste à réaliser les rangées 36 de cellules 34 acoustiques et les portions de liaison 40 associées venues de matière.

La présente description de l'invention est donnée à titre d'exemple non limitatif.

## Revendications

1. Dispositif (30) de dégivrage et de traitement acoustique pour une lèvre (24) d'entrée d'air d'une nacelle (10) de turboréacteur, **caractérisé en ce qu'**il comporte une structure acoustique (32) gaufrée qui est adaptée pour être en appui sur une peau acoustique (33) de la lèvre (24) d'entrée d'air, et qui délimite une pluralité de cellules (34) acoustiques, chaque cellule (34) étant délimitée par une paroi périphérique (38) indépendante qui permet la circulation d'un flux d'air de dégivrage autour de chaque cellule (34).

2. Dispositif (30) de dégivrage et de traitement acoustique selon la revendication 1, **caractérisé en ce que** la structure acoustique (32) délimite au moins deux rangées (36) de cellules (34) qui sont reliées entre elles par au moins une portion de liaison (40) adaptée pour être en appui sur la peau acoustique (33) de la lèvre (24) d'entrée d'air.

3. Dispositif (30) de dégivrage et de traitement acoustique selon la revendication 2, **caractérisé en ce que** les cellules (34) sont réalisées venues de matière avec la portion de liaison (40) associée.

4. Dispositif (30) de dégivrage et de traitement acoustique selon l'une quelconque des revendications 2 et 3, **caractérisé en ce que** chaque rangée (36) de cellules (34) acoustiques présente une forme annulaire autour d'un axe (A) central.

5. Dispositif (30) de dégivrage et de traitement acoustique selon l'une quelconque des revendications précédentes, **caractérisé en ce que** la structure acoustique (32) présente une forme annulaire monolithique ou une forme de plusieurs secteurs angulaires monolithiques.

6. Dispositif (30) de dégivrage et de traitement acoustique selon l'une quelconque des revendications précédentes, **caractérisé en ce que** chaque cellule (34) présente une forme globalement pyramidale.

7. Dispositif (30) de dégivrage et de traitement acoustique selon l'une quelconque des revendications précédentes, **caractérisé en ce qu'**il comporte au moins un déflecteur (46, 52) qui est conçu pour guider un flux d'air de dégivrage vers la structure acoustique (32).

8. Dispositif (30) de dégivrage et de traitement acoustique selon l'une quelconque des revendications 1 à 6, **caractérisé en ce qu'**il comporte un tube (42) de distribution de l'air de dégivrage qui présente une forme torique autour de l'axe (A) et qui délimite une pluralité de fentes (44) formant injecteurs, les fentes étant agencées en regard des cellules (34) pour diriger l'air de dégivrage entre les cellules (34).

9. Procédé de fabrication d'un dispositif (30) de dégivrage et de traitement acoustique pour une lèvre (24) d'entrée d'air d'une nacelle (10) de turboréacteur, dispositif (30) qui comporte une structure acoustique (32) gaufrée qui est adaptée pour être en appui sur une peau acoustique (33) de la lèvre (24) d'entrée d'air, et qui délimite une pluralité de cellules (34) acoustiques, chaque cellule (34) étant délimitée par une paroi périphérique (38) indépendante qui permet la circulation d'un flux d'air de dégivrage autour de chaque cellule (34), le procédé comprenant en outre au moins une étape de fabrication qui consiste à réaliser la structure acoustique (32) venue de matière en une pièce monolithique.

10. Nacelle (10) de turboréacteur comportant un dispositif (30) de dégivrage et de traitement acoustique selon l'une quelconque des revendications 1 à 8.

## Patentansprüche

1. Vorrichtung (30) zur Enteisung und zur Schallbehandlung für eine Lufteinlasslippe (24) einer Turbotriebwerksgondel (10), **dadurch gekennzeichnet, dass** sie eine gaufrierte Schallstruktur (32) beinhaltet, die angepasst ist, um an einer Schallhaut (33) der Lufteinlasslippe (24) anzuliegen, und die eine Vielzahl von Schallzellen (34) begrenzt, wobei jede Zelle (34) durch eine unabhängige Umfangswand (38) begrenzt wird, welche die Zirkulation eines Enteisungsluftstroms um jede Zelle (34) herum ermöglicht.

2. Vorrichtung (30) zur Enteisung und zur Schallbehandlung nach Anspruch 1, **dadurch gekennzeichnet, dass** die Schallstruktur (32) mindestens zwei Reihen (36) an Zellen (34) begrenzt, die durch mindestens einen Verbindungsabschnitt (40) miteinander verbunden sind, der angepasst ist, um an der Schallhaut (33) der Lufteinlasslippe (24) anzuliegen.

3. Vorrichtung (30) zur Enteisung und zur Schallbehandlung nach Anspruch 2, **dadurch gekennzeichnet, dass** die Zellen (34) mit dem zugehörigen Verbindungsabschnitt (40) aus demselben Material integral hergestellt sind.

4. Vorrichtung (30) zur Enteisung und zur Schallbehandlung nach einem der Ansprüche 2 und 3, **dadurch gekennzeichnet, dass** jede Reihe (36) an Schallzellen (34) eine Ringform um eine Mittelachse (A) herum aufweist.

5. Vorrichtung (30) zur Enteisung und zur Schallbehandlung nach einem der vorstehenden Ansprüche, **dadurch gekennzeichnet, dass** die Schallstruktur (32) eine monolithische Ringform oder eine Form aus mehreren monolithischen Winkelsektoren aufweist.

6. Vorrichtung (30) zur Enteisung und zur Schallbehandlung nach einem der vorstehenden Ansprüche, **dadurch gekennzeichnet, dass** jede Zelle (34) eine im Allgemeinen pyramidenförmige Form aufweist.

7. Vorrichtung (30) zur Enteisung und zur Schallbehandlung nach einem der vorstehenden Ansprüche, **dadurch gekennzeichnet, dass** sie mindestens einen Abweiser (46, 52) beinhaltet, der ausgeführt ist, um einen Enteisungsluftstrom zur Schallstruktur (32) zu leiten.

8. Vorrichtung (30) zur Enteisung und zur Schallbehandlung nach einem der Ansprüche 1 bis 6, **dadurch gekennzeichnet, dass** sie ein Verteilungsrohr (42) für die Enteisungsluft beinhaltet, welches eine torische Form um die Achse (A) herum aufweist, und welches eine Vielzahl von Injektoren bildenden Schlitzen (44) begrenzt, wobei die Schlitze gegenüber den Zellen (34) angeordnet sind, um die Enteisungsluft zwischen den Zellen (34) zu führen.

9. Verfahren zur Herstellung einer Vorrichtung (30) zur Enteisung und zur Schallbehandlung für eine Lufteinlasslippe (24) einer Turbotriebwerksgondel (10), einer Vorrichtung (30), die eine gaufrierte Schallstruktur (32) beinhaltet, die angepasst ist, um an einer Schallhaut (33) der Lufteinlasslippe (24) anzuliegen, und die eine Vielzahl von Schallzellen (34) begrenzt, wobei jede Zelle (34) durch eine unabhängige Umfangswand (38) begrenzt wird, welche die Zirkulation eines Enteisungsluftstroms um jede Zelle (34) herum ermöglicht, wobei das Verfahren weiter mindestens einen Herstellungsschritt beinhaltet, der darin besteht, die Schallstruktur (32) aus demselben Material integral in einem monolithischen Teil zu fertigen.

10. Turbotriebwerksgondel (10), die eine Vorrichtung (30) zur Enteisung und zur Schallbehandlung nach einem der Ansprüche 1 bis 8 beinhaltet.

## Claims

1. A defrosting and acoustic treatment device (30) for an air intake lip (24) of a turbojet engine nacelle (10), **characterized in that** it includes an embossed acoustic structure (32) which is adapted to bear on an acoustic skin (33) of the air intake lip (24), and which delimits a plurality of acoustic cells (34), each cell (34) being delimited by an independent peripheral wall (38) which allows the circulation of a defrost air flow around each cell (34).

2. The defrosting and acoustic treatment device (30) according to claim 1, **characterized in that** the acoustic structure (32) delimits at least two rows (36) of cells (34) which are connected together by at least one connecting portion (40) adapted to be bearing on the acoustic skin (33) of the air intake lip (24).

3. The defrosting and acoustic treatment device (30) according to claim 2, **characterized in that** the cells (34) are made in one piece with the associated connecting portion (40).

4. The defrosting and acoustic treatment device (30) according to any one of claims 2 and 3, **characterized in that** each row (36) of acoustic cells (34) has an annular shape about a central axis (A).

5. The defrosting and acoustic treatment device (30) according to any one of the preceding claims, **characterized in that** the acoustic structure (32) has a monolithic annular shape or a shape of several monolithic angular sectors.

6. The defrosting and acoustic treatment device (30) according to any one of the preceding claims, **characterized in that** each cell (34) has a generally pyramidal shape.

7. The defrosting and acoustic treatment device (30) according to any one of the preceding claims, **characterized in that** it includes at least one deflector (46, 52) which is designed to guide a defrost air flow towards the acoustic structure (32).

8. The defrosting and acoustic treatment device (30) according to any one of claims 1 to 6, **characterized in that** it includes a tube (42) for distributing the defrost air which has a toroidal shape about the axis (A) and which delimits a plurality of slots (44) forming injectors, the slots being arranged opposite the cells (34) to direct the defrost air between the cells (34).

9. A method for manufacturing a defrosting and acoustic treatment device (30) for an air intake lip (24) of a turbojet engine nacelle (10), device (30) which includes an embossed acoustic structure (32) which is adapted to bear on an acoustic skin (33) of the air intake lip (24) and which delimits a plurality of acoustic cells (34), each cell (34) being delimited by an independent peripheral wall (38) which allows the circulation of a defrost air flow around each cell (34), the method further comprising at least one manufacturing step which consists in producing the acoustic structure (32) made in one piece into a monolithic part.

10. A nacelle (10) of a turbojet engine comprising a defrosting and acoustic treatment device (30) according to any one of claims 1 to 8.
